(19) **Europäisches Patentamt / European Patent Office / Office européen des brevets**

(11) **EP 4 598 112 A1**

(12) **EUROPEAN PATENT APPLICATION**
published in accordance with Art. 153(4) EPC

(43) Date of publication:
06.08.2025 Bulletin 2025/32

(21) Application number: 22960828.6

(22) Date of filing: 27.09.2022

(51) International Patent Classification (IPC):
*H04W 28/18* (2009.01)

(52) Cooperative Patent Classification (CPC):
H04W 28/18

(86) International application number:
PCT/JP2022/035987

(87) International publication number:
WO 2024/069764 (04.04.2024 Gazette 2024/14)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(71) Applicants:
• NIPPON TELEGRAPH AND TELEPHONE CORPORATION
Chiyoda-ku, Tokyo 100-8116 (JP)
• NTT DOCOMO, INC.
Tokyo 100-6150 (JP)

(72) Inventors:
• FUKUZONO, Hayato
Musashino-shi, Tokyo 180-8585 (JP)
• MIYAGI, Toshifumi
Musashino-shi, Tokyo 180-8585 (JP)
• ONIZAWA, Takeshi
Musashino-shi, Tokyo 180-8585 (JP)
• OKUYAMA, Tatsuki
Tokyo 100-6150 (JP)
• SUYAMA, Satoshi
Tokyo 100-6150 (JP)
• KISHIYAMA, Yoshihisa
Tokyo 100-6150 (JP)

(74) Representative: Hoffmann Eitle
Patent- und Rechtsanwälte PartmbB
Arabellastraße 30
81925 München (DE)

(54) **WIRELESS COMMUNICATION SYSTEM, WIRELESS TERMINAL, WIRELESS BASE STATION, WIRELESS COMMUNICATION METHOD, AND WIRELESS COMMUNICATION PROGRAM**

(57) The present disclosure relates to a wireless communication system pertaining to an adaptive modulation technique that changes a modulation method of a wireless signal according to communication quality of wireless communication, and an object of the present disclosure is to provide a wireless communication system in which, even when a wireless terminal device located far from a wireless base station transmits a wireless signal, a transmitted waveform of a wireless signal is not accompanied by nonlinear distortion degradation of an amplifier. In the wireless communication system according to the present disclosure, MCS indexes include a single carrier modulation scheme as a secondary modulation scheme. A transmitter is configured to execute: processing of selecting one of the MCS indexes by comparing a reception quality notified by a receiver and a required reception quality specified for each of the MCS indexes with each other; processing of modulating and coding a transmission signal; and processing of transmitting the transmission signal to the receiver.

The receiver is configured to execute: processing of calculating the reception quality based on average transmission power and a nonlinear distortion degradation amount notified by the transmitter; and processing of transmitting the reception quality to the transmitter.

Fig. 8

| MCS' | PRIMARY MODULATION | SECONDARY MODULATION | CODE RATE | REQUIRED SINR |
|---|---|---|---|---|
| C-1 | BPSK | CP-OFDM | ○○ | ○○dB |
| C-2 | QPSK | CP-OFDM | ○○ | ○○dB |
| C-3 | 16QAM | CP-OFDM | ○○ | ○○dB |
| C-4 | 64QAM | CP-OFDM | ○○ | ○○dB |
| ⋮ | ⋮ | ⋮ | ⋮ | ⋮ |
| D-1 | BPSK | DFT-spread | ○○ | ○○dB |
| D-2 | QPSK | DFT-spread | ○○ | ○○dB |
| D-3 | 16QAM | DFT-spread | ○○ | ○○dB |
| D-4 | 64QAM | DFT-spread | ○○ | ○○dB |
| ⋮ | ⋮ | ⋮ | ⋮ | |

| MCS' | PRIMARY MODULATION | SECONDARY MODULATION | CODE RATE | REQUIRED SINR |
|---|---|---|---|---|
| S-1 | BPSK | Single-carrier | ○○ | ○○dB |
| S-2 | QPSK | Single-carrier | ○○ | ○○dB |
| S-3 | 16QAM | Single-carrier | ○○ | ○○dB |
| S-4 | 64QAM | Single-carrier | ○○ | ○○dB |
| ⋮ | ⋮ | ⋮ | ⋮ | ⋮ |

EP 4 598 112 A1

## Description

### Field

The present disclosure relates to a wireless communication system, a wireless terminal device, a wireless base station, a wireless communication method, and a wireless communication program pertaining to an adaptive modulation technique which changes a modulation scheme of wireless signals according to a communication quality of wireless communication.

### Background

In wireless communication, an adaptive modulation technique is used which adaptively changes a modulation scheme of wireless signals according to a communication line quality between a wireless base station and a wireless terminal device. An SINR (Signal-to-Interference plus Noise power Ratio) on a receiving side or the like is used as the communication line quality. Note that the SINR is a ratio of received signal power of a desired wave signal to a sum of other interfering wave signals and noise power.

NPL 1 discloses a technique in which a secondary modulation scheme is fixed to one type such as an OFDM (Orthogonal Frequency Division Multiple) scheme and a primary modulation scheme is changed according to an SINR. This method enables appropriate wireless signals to be transmitted according to a wireless propagation environment.

Peak-to-average power ratio (PAPR) characteristics of the OFDM scheme is disclosed in NPL 2.

### Citation List

### Non Patent Literature

NPL 1: A. Chiumento, et al., "Adaptive CSI and feedback estimation in LTE and beyond: a Gaussian process regression approach", EURASIP Journal on Wireless Communications and Networking (2015).

NPL 2: F. Khan, "LTE for 4G Mobile Broadband Air Interface Technologies and Performance", Cambridge University Press, p.95, (2009).

### Summary

### Technical Problem

However, in the conventional techniques, since a wireless terminal device located far from a wireless base station requires large transmission power when transmitting a wireless signal, there is a problem in that a transmitted waveform of the wireless signal is accompanied by nonlinear distortion degradation of an amplifier.

In order to solve the problem described above, a first object of the present disclosure is to provide a wireless communication system in which, even when a wireless terminal device located far from a wireless base station transmits a wireless signal, a transmitted waveform of a wireless signal is not accompanied by nonlinear distortion degradation of an amplifier.

In addition, a second object of the present disclosure is to provide a wireless terminal device in which, even when the wireless terminal device located far from a wireless base station transmits a wireless signal, a transmitted waveform of a wireless signal is not accompanied by nonlinear distortion degradation of an amplifier.

In addition, a third object of the present disclosure is to provide a wireless base station in which, even when a wireless terminal device located far from the wireless base station transmits a wireless signal, a transmitted waveform of a wireless signal is not accompanied by nonlinear distortion degradation of an amplifier.

In addition, a fourth object of the present disclosure is to provide a wireless communication method in which, even when a wireless terminal device located far from a wireless base station transmits a wireless signal, a transmitted waveform of a wireless signal is not accompanied by nonlinear distortion degradation of an amplifier.

In addition, a fifth object of the present disclosure is to provide a wireless communication program in which, even when a wireless terminal device located far from a wireless base station transmits a wireless signal, a transmitted waveform of a wireless signal is not accompanied by nonlinear distortion degradation of an amplifier.

**Solution to Problem**

A first aspect of the present disclosure is preferably a wireless communication system which performs adaptive modulation of a wireless signal to be transmitted by a transmitter by selecting one of MCS indexes being combinations of a predefined modulation scheme and coding rate in accordance with a reception quality of a receiver, wherein the transmitter is configured to execute:

nonlinear distortion degradation amount calculation processing of calculating a nonlinear distortion degradation amount of an amplified signal based on nonlinear characteristics of an amplifier provided in the transmitter;
processing of notifying the receiver of information on average transmission power of the transmitter and the nonlinear distortion degradation amount;
modulation coding scheme selection processing of selecting one of the MCS indexes by comparing the reception quality notified by the receiver and a required reception quality specified for each of the MCS indexes with each other;
modulation coding processing of modulating and coding a transmission signal based on the one MCS index selected in the modulation coding scheme selection processing; and
processing of transmitting the transmission signal modulated and coded in the modulation coding processing to the receiver,
the receiver is configured to execute:

reception quality calculation processing of calculating the reception quality based on the average transmission power and the nonlinear distortion degradation amount notified by the transmitter; and
processing of transmitting the reception quality calculated in the reception quality calculation processing to the transmitter, and
the MCS index includes a single carrier modulation scheme as a secondary modulation scheme.

A second aspect of the present disclosure is preferably a wireless terminal device which performs adaptive modulation of a wireless signal to be transmitted by selecting one of MCS indexes being combinations of a modulation scheme and coding rate in accordance with a reception quality of a receiver, the wireless terminal device being configured to execute:

processing of calculating a nonlinear distortion degradation amount of an amplified signal based on nonlinear characteristics of an amplifier provided in the wireless terminal device;
processing of notifying the receiver of information on average transmission power of the wireless terminal device and the nonlinear distortion degradation amount;
modulation coding scheme selection processing of selecting one of the MCS indexes by comparing the reception quality notified by the receiver and a required reception quality specified for each of the MCS indexes with each other;
modulation coding processing of modulating and coding a transmission signal based on the one MCS index selected in the modulation coding scheme selection processing; and
processing of transmitting the transmission signal modulated and coded in the modulation coding processing to the receiver, wherein
the MCS index includes a single carrier modulation scheme as a secondary modulation scheme.

A third aspect of the present disclosure is preferably a wireless base station configured to execute:

processing of calculating a fading margin value of a wireless signal to be transmitted by another wireless station to the wireless base station;
reception quality calculation processing of calculating, based on the fading margin value, average transmission power which is notified by the other wireless station, and a nonlinear distortion degradation amount of an amplifier provided in the other wireless station which is calculated with respect to all MCS indexes expected to be used by the other wireless station and which is notified by the other wireless station, reception quality with respect to all of the MCS indexes expected to be used by the other wireless station, respectively; and
processing of transmitting all of the reception qualities calculated in the reception quality calculation processing to the other wireless station.

A fourth aspect of the present disclosure is preferably a wireless communication method of performing adaptive modulation of a wireless signal to be transmitted by a transmitter by selecting one of MCS indexes being combinations of a modulation scheme and coding rate in accordance with a reception quality of a receiver, wherein the transmitter executes:

processing of calculating a nonlinear distortion degradation amount of an amplified signal based on nonlinear characteristics of an amplifier provided in the transmitter;

processing of notifying the receiver of information on average transmission power of the transmitter and the nonlinear distortion degradation amount;

modulation coding scheme selection processing of selecting one of the MCS indexes by comparing the reception quality notified by the receiver and a required reception quality specified for each of the MCS indexes with each other;

modulation coding processing of modulating and coding a transmission signal based on the one MCS index selected in the modulation coding scheme selection processing; and

processing of transmitting the transmission signal modulated and coded in the modulation coding processing to the receiver, and

the receiver executes:

reception quality calculation processing of calculating the reception quality based on the average transmission power and the nonlinear distortion degradation amount notified by the transmitter; and

processing of transmitting the reception quality calculated in the reception quality calculation processing to the transmitter, and

the MCS index includes a single carrier modulation scheme as a secondary modulation scheme.

A fifth aspect of the present disclosure is preferably a wireless communication program to be executed by a wireless terminal device which performs adaptive modulation of a wireless signal to be transmitted by selecting one of MCS indexes being combinations of a modulation scheme and coding rate in accordance with a reception quality of a receiver, wherein

the MCS indexes include a single carrier modulation scheme as a secondary modulation scheme, and the wireless communication program includes a program that causes

the wireless terminal device to execute:

processing of calculating a nonlinear distortion degradation amount of an amplified signal based on nonlinear characteristics of an amplifier provided in the wireless terminal device;

processing of notifying the receiver of information on average transmission power of the wireless terminal device and the nonlinear distortion degradation amount;

modulation coding scheme selection processing of selecting one of the MCS indexes by comparing the reception quality notified by the receiver and a required reception quality specified for each of the MCS indexes with each other;

modulation coding processing of modulating and coding a transmission signal based on the one MCS index selected in the modulation coding scheme selection processing; and

processing of transmitting the transmission signal modulated and coded in the modulation coding processing to the receiver.

## Advantageous Effects of the Invention

According to the first to fifth aspects of the present disclosure, a wireless communication system, a wireless terminal device, a wireless base station, a wireless communication method, and a wireless communication program can be provided in which, even when a wireless terminal device located far from a wireless base station transmits a wireless signal, a transmitted waveform of the wireless signal is not accompanied by nonlinear distortion degradation of an amplifier.

## Brief Description of the Drawings

Fig. 1 is a diagram showing a configuration example of a conventional wireless communication system according to a comparative example of the present disclosure.

Fig. 2 shows an example of an MCS index disclosed in NPL 1 according to a comparative example of the present disclosure.

Fig. 3 is a schematic view for describing details of a nonlinear distortion degradation amount ($P_T$) in (Expression 1).

Fig. 4 is a diagram showing PAPR characteristics of a signal of an OFDM scheme disclosed in NPL 2 according to a comparative example of the present disclosure.

Fig. 5 shows a configuration example of a wireless communication system according to a first embodiment of the present disclosure.

Fig. 6 is a block diagram showing a functional configuration example of a transmitter and a receiver according to the first embodiment of the present disclosure.

Fig. 7 is a schematic view showing a derivation method of a fading margin value F according to the first embodiment of the present disclosure.

Fig. 8 shows an example of a table of modified MCS indexes according to the first embodiment of the present disclosure.

Fig. 9 is a flowchart for describing processing to be performed by the transmitter and the receiver according to the first embodiment of the present disclosure.

**Description of Embodiment**

[Comparative Example]

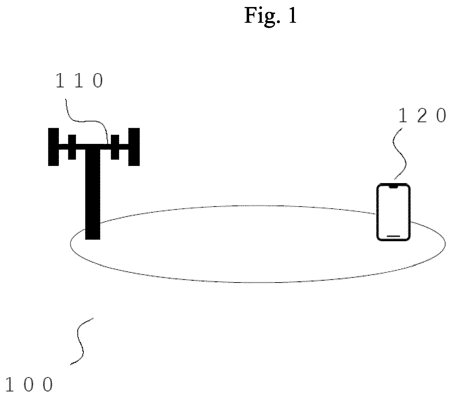

First, a conventional technique will now be described as a comparative example. Fig. 1 is a diagram showing a configuration example of a conventional wireless communication system according to a comparative example of the present disclosure. A conventional wireless communication system 100 includes a wireless base station (hereinafter, referred to as a base station) 110 and a wireless terminal device (hereinafter, referred to as a terminal) 120.

The base station 110 is a wireless station that receives radio waves from the terminal 120 and connects to a core network in a wired manner or, conversely, converts signals from the core network into radio waves and transmits the converted radio waves to the terminal 120. If the applicable wireless communication system is Wi-Fi (registered trademark), the base station 110 corresponds to an access point. The base station notifies the terminal 120 of its own SINR.

The terminal 120 communicates wirelessly with the base station 110. The terminal 120 is a terminal such as a smartphone. When the terminal 120 transmits a wireless signal to the base station 110, adaptive modulation is performed based on information on the SINR notified by the base station 110. In the adaptive modulation, only the primary modulation scheme is controlled and the secondary modulation scheme is fixed to one type such as an OFDM scheme.

The SINR of the base station 110 notified to the terminal 120 is calculated based on (Expression 1) below, where $P_T$ denotes average transmission power of the terminal 120 as notified by the terminal 120 to the base station 110, L denotes propagation loss, I denotes interference noise power, and N denotes noise power. Furthermore, $D(P_T)$ denotes a nonlinear distortion degradation amount notified from the terminal 120 to the base station 110.

$$\text{SINR}(P_T) = P_T - L - I - N - D(P_T) \qquad \text{(Expression 1)}$$

In the base station 110, the propagation loss L, the interference noise power I, and the noise power N are measured, and the SINR is calculated based on (Expression 1) using the average transmission power $P_T$ and the nonlinear distortion degradation amount $D(P_T)$ notified by the terminal 120. Accordingly, a propagation environment of a wireless signal between the base station 110 and the terminal 120 can be estimated.

In this case, the propagation loss L is an amount of loss which occurs when a wireless signal propagates between the base station 110 and the terminal 120 and which is an amount dependent on a distance between the base station 110 and the terminal 120. For example, the propagation loss L can be obtained by having the base station 110 acquire location information of the terminal 120 and calculate a distance of the terminal 120 from the base station 110. The propagation loss L is larger for terminals 120 farther away from the base station 110, and in (Expression 1), the propagation loss L acts in a direction of lowering the SINR. Therefore, in order for the base station 110 being the receiving side to meet a desired reception quality, the terminal 120 must transmit the wireless signal with a large average transmission power $P_T$.

As described above, in the conventional wireless communication system 100, the terminal 120 controls the primary modulation scheme based on the SINR calculated by the base station 110 being the receiving side.

While there is only one terminal in the example shown in Fig. 1, a plurality of terminals may be provided.

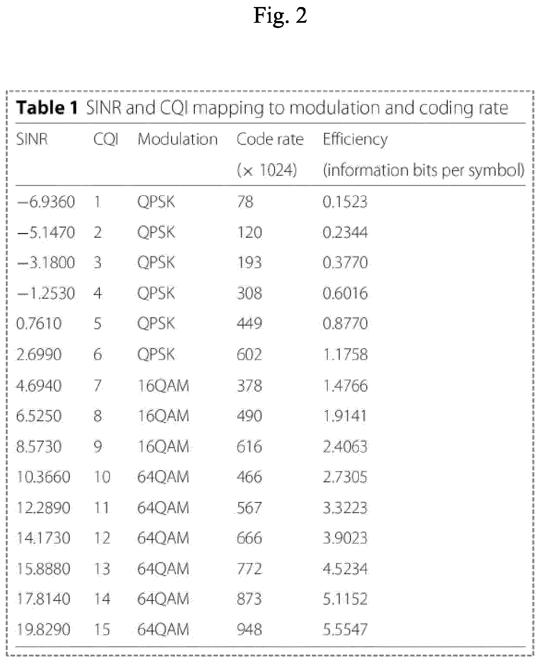

Fig. 2 shows an example of an MCS index disclosed in NPL 1 according to a comparative example of the present disclosure. In Fig. 2, combinations of a modulation method (Modulation) and a coding rate (Code Rate) are tabulated according to the SINR. The terminal 120 performs primary modulation and coding by selecting and switching one of the MCS (Modulation and Coding Scheme) indexes thus tabulated.

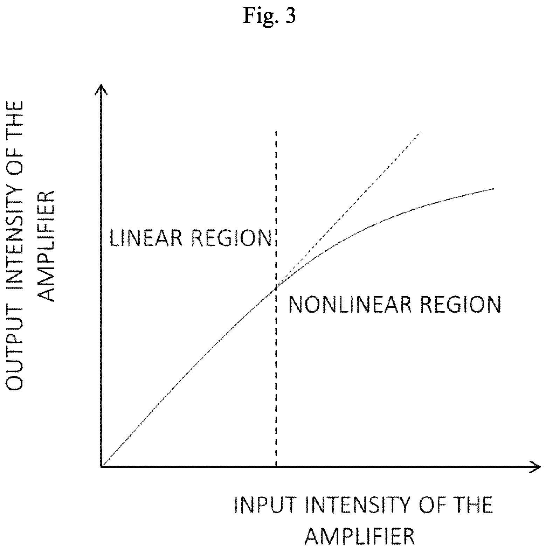

Fig. 3 is a schematic view for describing details of a nonlinear distortion degradation amount $D(P_T)$ in (Expression 1). Fig. 3 represents input/output characteristics of an amplifier used when the terminal 120 transmits a signal. An axis of abscissa and an axis of ordinate represent input intensity and output intensity of the amplifier, respectively, in dBm, for example. The output intensity of the amplifier responds linearly in the region where the input intensity is small (linear region). However, when the intensity of the input signal exceeds a certain region, the response becomes nonlinear and the actual output intensity is smaller than an assumed linear response (nonlinear region).

A loss of output due to distortion of an amplified waveform which occurs when the amplifier operates in the nonlinear region in this manner is a nonlinear distortion degradation amount.

When the terminal 120 which is far from the base station 110 transmits a wireless signal or, in other words, when the terminal 120 transmits at a large average transmission power $P_T$, response in the nonlinear region is inevitable and the effect of nonlinear distortion become particularly noticeable.

Furthermore, since the secondary modulation scheme is fixed to the OFDM scheme in the conventional technology, the PAPR being a ratio of the maximum transmission power to the average transmission power of the modulated signal is high. Therefore, nonlinear response of the amplifier is inevitable and there is a problem in that a wireless signal is accompanied by degradation due to nonlinear distortion.

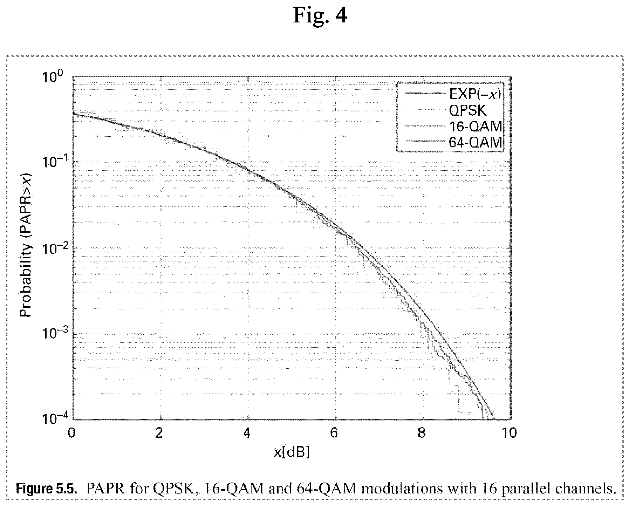

Fig. 4 is a diagram showing PAPR characteristics of a signal of an OFDM scheme disclosed in NPL 2 according to a comparative example of the present disclosure. In Fig. 4, PAPR characteristics are shown for a case where the secondary modulation is fixed to the OFDM scheme and the single modulation order is varied. It is obvious that lowering the order of the primary modulation scheme in the order of 64-QAM, 16-QAM, and QPSK does not decrease the PAPR.

As described above with reference to Figs. 1 to 4, in the conventional techniques, fixing the secondary modulation scheme to OFDM forced the amplifier to amplify OFDM signals with high PAPR. Therefore, nonlinear distortion degradation of the amplifier was unavoidable. This problem was particularly noticeable in the transmission of wireless signals by terminals 120 far away from the base station 110.

**First Embodiment**

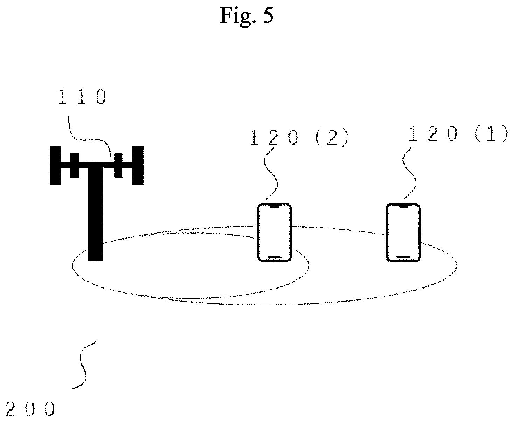

Fig. 5 shows a configuration example of a wireless communication system according to a first embodiment of the present disclosure. A wireless communication system 200 includes the base station 110 and the terminal 120 in a similar manner to the conventional wireless communication system 100. However, for the sake of illustration, it is assumed that two terminals 120(1) and 120(2) with different distances from the base station 110 are provided.

In the wireless communication system 200 according to the present disclosure, when the terminal 120 transmits a wireless signal to the base station 110, adaptive modulation is performed in accordance with an SINR notified by the base station 110 on the receiving side in a similar manner to the comparative example. However, in the wireless communication system according to the present disclosure, the SINR is calculated based on (Expression 2) below.

$$\text{SINR} (P_T, \text{MCS}') = P_T - L - I - N - D (P_T, \text{MCS}') - F \qquad \text{(Expression 2)}$$

In a similar manner to the comparative example, $P_T$ denotes average transmission power of the terminal 120, L denotes propagation loss, I denotes interference noise power, and N denotes noise power. On the other hand, unlike the comparative example, $D (P_T, \text{MCS}')$ denotes a nonlinear distortion degradation amount that takes an MCS index including secondary modulation switching (hereafter referred to as a modified MCS index and denoted as MCS' when it is explicitly stated that it is an argument of a function) in addition to the average transmission power $P_T$. Furthermore, F denotes a fading margin value which takes loss of power due to fading of a wireless signal into consideration and which is a loss amount not taken into consideration in the comparative example.

In (Expression 2), the propagation loss L, the interference noise power I, and the noise power N are amounts measured by the base station 110 in a similar manner to the comparative example. In addition, the average transmission power $P_T$ and the nonlinear distortion degradation amount $D (P_T, \text{MCS}')$ are, similarly, amounts notified by the terminal 120. The fading margin value F is a value which is determined by a simulation in advance in the base station 110.

Here, in the present embodiment, the nonlinear distortion degradation amount is determined by taking into consideration that the nonlinear distortion degradation amount actually depends not only on the average transmission power $P_T$ but also on a modulation scheme and a coding rate of the transmission signal. In other words, in the present embodiment, the nonlinear distortion degradation amount $D (P_T, \text{MCS}')$ is calculated as a function which also depends on the modified MCS index in addition to the average transmission power $P_T$. Using such a nonlinear distortion degradation amount $D (P_T, \text{MCS}')$ enables an SINR that is more in line with reality to be calculated and enables estimation accuracy of a propagation environment of a wireless signal to be improved.

As described above, the wireless communication system 200 according to the present disclosure calculates the SINR $D (P_T, \text{MCS}')$ shown in (Expression 2). In (Expression 2), the nonlinear distortion degradation $D (P_T, \text{MCS}')$ and the fading margin value F which also take into consideration the modulation scheme and the coding rate of the wireless signal are taken into consideration, and the propagation environment of the wireless signal can be estimated more accurately than with conventional techniques. Accordingly, in controlling adaptive modulation based on the SINR, an optimal modulation scheme can be selected according to the actual propagation environment.

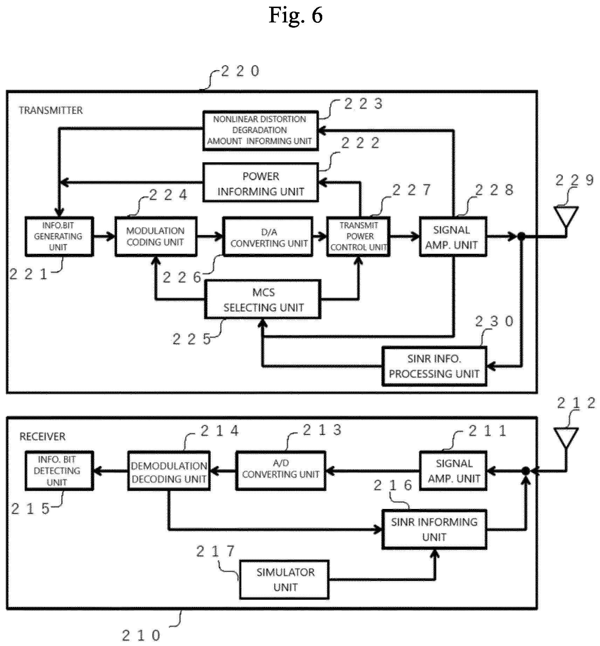

Fig. 6 is a block diagram showing a functional configuration example of a transmitter and a receiver according to the first embodiment of the present disclosure. Here, the terminal 120 is paraphrased as a transmitter 220 and the base station 110 as a receiver 210.

First, functions of the transmitter 220 will be described. An information bit generating unit 221 generates a data information bit that the transmitter 220 is to transmit to the receiver 210. The generated data information bit also includes information on the average transmission power $P_T$ of the transmitter 220 notified by a power informing unit 222 and the nonlinear distortion degradation amount D ($P_T$, MCS') of the transmitter 220 notified by a nonlinear distortion degradation amount informing unit 223. A modulation coding unit 224 applies error correction coding processing based on the modified MCS index determined by a modulation coding scheme selecting unit 225 to the information bit generated in the information bit generating unit 221. In addition, a digital data signal subjected to primary and secondary modulation is generated. A digital-analog converting unit 226 is a portion which subjects the data signal having been digitally-modulated in the modulation coding unit 224 to analog conversion.

A transmit power control unit 227 controls transmission power with respect to the analog-converted data signal according to a desired communication quality and according to the modified MCS index selected by the modulation coding scheme selecting unit 225. A signal amplifying unit 228 amplifies a transmission signal input from the transmit power control unit 227 and inputs the amplified signal to an antenna 229. The antenna 229 transmits a wireless signal toward the receiver 210. Alternatively, the antenna 229 receives a wireless signal transmitted by the receiver 210.

Furthermore, the modulation coding scheme selecting unit 225 of the transmitter 220 is a portion which selects one of the modified MCS indexes based on information on the SINR notified by an SINR information processing unit 230 and which notifies the modulation coding unit 224 and the transmit power control unit 227 of the selection. The power informing unit 222 is a portion which transmits the average transmission power $P_T$ to the information bit generating unit 221. The nonlinear distortion degradation amount informing unit 223 is a portion which calculates the nonlinear distortion degradation amount D ($P_T$, MCS') and which notifies the information bit generating unit 221 of a calculation result. The SINR information processing unit 230 processes information on the SINR ($P_T$, MCS') included in the wireless signal transmitted from the receiver 210 and notifies the modulation coding scheme selecting unit 225 of the processed information.

Here, the nonlinear distortion degradation amount D ($P_T$, MCS') calculated by the nonlinear distortion degradation amount informing unit 223 is an amount calculated with respect to each of all modified MCS indexes that are expected to be used among the modified MCS indexes tabulated in advance. Therefore, note that the nonlinear distortion degradation amount D ($P_T$, MCS') that the transmitter 220 notifies to the receiver 210 exists in the number of modified MCS indexes that are expected to be used.

Next, functions of the receiver 210 will be described. A signal amplifying unit 211 is a portion which amplifies a received signal that is received by an antenna 212. An analog-digital converting unit 213 is a portion which digitizes an analog received signal for digital demodulation. A demodulation decoding unit 214 performs demodulation and error correction decoding of a received data signal and outputs an acquired information bit to an information bit detecting unit 215. Furthermore, the demodulation decoding unit 214 notifies an SINR informing unit 216 of information on the average transmission power $P_T$ of the transmitter 220 and the nonlinear distortion degradation amount D ($P_T$, MCS') which are included in received data. The information bit detecting unit 215 detects an information bit.

In addition, a simulator unit 217 determines a fading margin value F of the transmission signal to be transmitted by the transmitter 220 by simulation and notifies the SINR informing unit 216 of the calculated fading margin value F.

Furthermore, the SINR informing unit 216 calculates an SINR ($P_T$, MCS') based on (Expression 2) based on the average transmission power $P_T$ of the transmitter 220 and the nonlinear distortion degradation amount D ($P_T$, MCS') notified by the demodulation decoding unit 214 and generates SINR information. The generated information of the SINR of the receiver 210 is sent to the antenna 212 to be transmitted as a wireless signal toward the transmitter 220.

Here, note that the SINR ($P_T$, MCS') calculated by the SINR informing unit 216 is calculated with respect to each of all modified MCS indexes that are expected to be used in the transmitter 220.

As described above, in the wireless communication system 200 according to the present embodiment, the transmitter 220 sends, to the receiver 210, a wireless signal that includes information on the average transmission power $P_T$ of the transmitter 220 and the nonlinear distortion degradation amount D ($P_T$, MCS') at the same time as the information data to be transmitted. The receiver 210 calculates an SINR ($P_T$, MCS') based on (Expression 2) using the pieces of information and a fading margin value F determined by simulation. Information on the SINR ($P_T$, MCS') calculated by the receiver 210 is transmitted to the transmitter 220 by a wireless signal. Based on the received SINR ($P_T$, MCS'), the transmitter 220 selects one of the modified MCS indexes in the modulation coding scheme selecting unit 225. Furthermore, based on the one selected modified MCS index, the transmitter 220 performs primary and secondary modulation and coding of a data signal and control of transmission power.

Note that the processing performed by the base station 110 being the receiver 210 and the terminal 120 being the transmitter 220 in the present disclosure may be executed programmatically using a computer which includes a CPU and memory and which has a program stored in the memory. Alternatively, the processing may be executed by a program using an integrated circuit such as an FPGA (Field Programmable Gate Array). The program may be provided recorded on a storage medium or provided through a network.

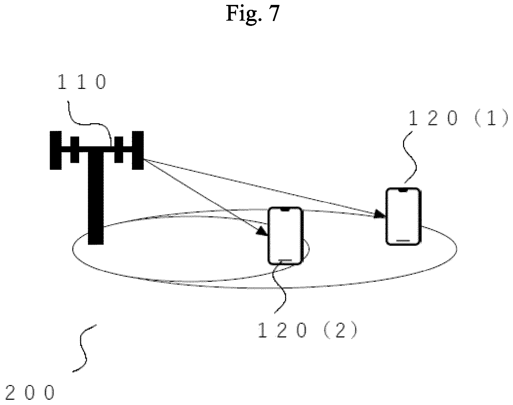

Fig. 7 is a schematic view showing a derivation method of the fading margin value F according to the first embodiment of the present disclosure. Fig. 7 shows how the simulator unit 217 which is provided inside the base station 110 on the receiving side determines the fading margin value F by simulation for each of the terminals 120(1) and 120(2). In the simulation, a CP (Cyclic Prefix) length, a Rician factor, a Doppler variation, or the like with respect to a delay spread of a wireless signal from each of the terminals 120(1) and 120(2) is input as a parameter.

Note that in Figs. 6 and 7, a case where the base station 110 being the receiver 210 includes the simulator unit 217 and performs a simulation is described. However, each of the terminals 120(1) and 120(2) being the transmitter 220 may include the simulator unit. In this case, the terminal 120 may notify the base station 110 of a result of the fading margin value F as well as the average transmission power $P_T$ of the terminal 120 and the nonlinear distortion degradation amount D ($P_T$, MCS').

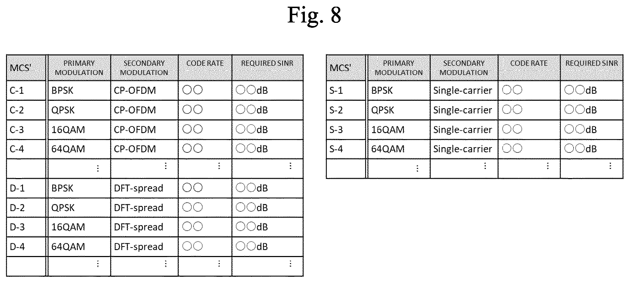

Fig. 8 shows an example of a table of modified MCS indexes according to the first embodiment of the present disclosure. In Fig. 8, the modified MCS indexes are determined according to required SINRs. In this case, a required SINR refers to an SINR on the receiver side which is required to receive a wireless signal transmitted with a target modified MCS index. Hereinafter, the required SINR determined for each of the modified MCS indexes will be denoted as a required SINR (MCS') and will be distinguished from the SINR ($P_T$, MCS') in (Expression 2).

The modulation coding scheme selecting unit 225 of the terminal 120 compares the required SINR (MCS') with the SINR ($P_T$, MCS') notified by the base station 110 to determine whether or not the target modified MCS index can be selected.

For example, if the SINR ($P_T$, MCS' = C-1) notified by the base station 110 is larger than the required SINR (MCS' = C-1), the modulation coding scheme selecting unit 225 of the terminal 120 ' can adopt the modified MCS index of MCS' = C-1.

In addition, in the example shown in Fig. 8, the modified MCS indexes include switching of not only primary modulation but also a secondary modulation scheme. Secondary modulation schemes include single-carrier modulation schemes as well as OFDM schemes such as CP-OFDM (CP: Cyclic Prefix) and DFT-spread (DFT: Discrete Fourier Transform). This allows the terminal 120 to adopt modified MCS indexes S-1, S-2, ..., S-4 including the single carrier scheme as secondary modulation.

For example, if the terminal 120 is positioned far from the base station 110, a large average transmission power $P_T$ is required to transmit a wireless signal from the terminal 120 to the base station 110. In this case, in order to avoid nonlinear distortion degradation in the signal amplifying unit 228, the secondary modulation is desirably a single carrier scheme. Therefore, if the SINR ($P_T$, MCS' = S-1, ..., S-4) notified by the base station 110 is higher than the required SINR (MCS' = S-1, ..., S-4), the terminal 120 can select one of S-1, ..., S-4. While adopting the secondary modulation of the single-carrier scheme in this manner reduces frequency utilization efficiency, the PAPR of the signal can be reduced.

On the contrary, if the terminal 120 is positioned sufficiently close to the base station 110, the transmission of a wireless signal from the terminal 120 to the base station 110 does not require a large average transmission power $P_T$. In this case, since an effect of nonlinear distortion degradation at the signal amplifying unit 228 is small, the secondary modulation may be the OFDM scheme. Therefore, for example, if the SINR ($P_T$, MCS' = C-1, ..., C-4) notified by the base station 110 is higher than the required SINR (MCS' = C-1, ..., C-4), the terminal 120 can adopt one of C-1, ..., C-4. Adopting the CP-OFDM scheme as the secondary modulation scheme enables ordinary multicarrier transmission with good frequency utilization efficiency to be realized.

As described above, in the wireless communication system 200 according to the present embodiment, optimal primary and secondary modulation and coding schemes can be selected according to a distance between the base station 110 and the terminal 120. Accordingly, even when the terminal 120 is located far from the base station 110, a wireless signal can be transmitted without any nonlinear distortion in the transmitted waveform of the wireless signal.

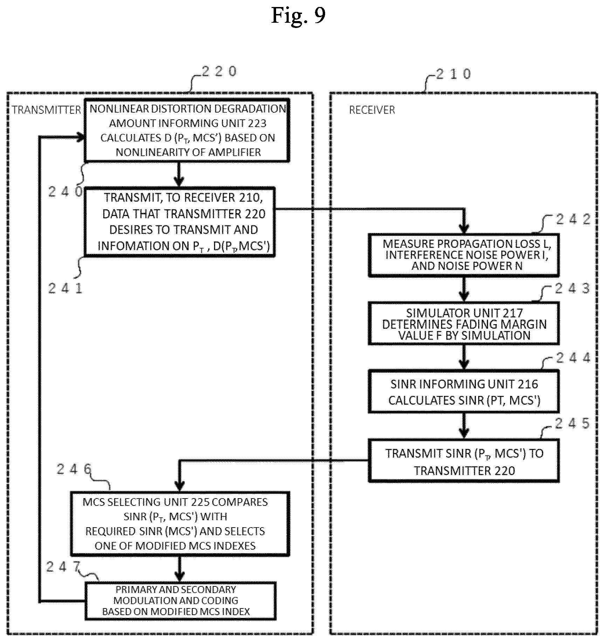

Fig. 9 is a flowchart for describing processing to be performed by the transmitter and the receiver according to the first embodiment of the present disclosure. Here, the terminal 120 will be paraphrased as a transmitter 220 and the base station 110 as a receiver 210 in a similar manner to Fig. 6.

First, the nonlinear distortion degradation amount informing unit 223 of the transmitter 220 calculates the nonlinear distortion degradation amount D ($P_T$, MCS') from the nonlinear characteristics of the amplifier with respect to all modified MCS indexes that are expected to be used, respectively (step 240). Next, the transmitter 220 sends, to the receiver 210, information that the transmitter 220 desires to transmit and information on the average transmission power $P_T$ and the nonlinear distortion degradation amount D ($P_T$, MCS') (step 241). Next, the receiver 210 having received these pieces of information measures the propagation loss L, the interference noise power I, and the noise power N (step 242). Furthermore, the simulator unit 217 of the receiver 210 determines the fading margin value F by simulation (step 243). In addition, the SINR informing unit 216 of the receiver 210 calculates the SINR ($P_T$, MCS') with respect to all modified MCS indexes that are expected to be used in the transmitter 220, respectively (step 244). Furthermore, the receiver 210 transmits the SINR ($P_T$, MCS') to the transmitter 220 (step 245).

Next, in the receiver 210 having received the information on the SINR ($P_T$, MCS'), the modulation coding scheme selecting unit 225 compares the SINR ($P_T$, MCS') and a required SINR (MCS') with each other and selects one modified MCS index from modified MCS indexes that satisfy conditions (step 246). Furthermore, based on the modified MCS index selected by the modulation coding scheme selecting unit 225, primary and secondary modulation and coding of a data signal to be transmitted are performed (step 247). After step 247, a return is made to step 240.

As described above, in the wireless communication system 200 according to the present embodiment, the transmitter 220 sends, to the receiver 210, information on the average transmission power $P_T$ of the transmitter 220 and the nonlinear distortion degradation amount D ($P_T$, MCS'). The receiver 210 calculates the SINR ($P_T$, MCS') based on these pieces of information and notifies the transmitter 220 of the calculated SINR ($P_T$, MCS'). The transmitter 220 selects one of the modified MCS indexes by comparing the SINR ($P_T$, MCS') notified from the receiver 210 with a required SINR (MCS'). Furthermore, the transmitter 220 performs primary and secondary modulation and coding based on the one selected modified MCS index.

As described above, according to the first to fifth aspects of the present disclosure, a wireless communication system, a wireless terminal device, a wireless base station, a wireless communication method, and a wireless communication program can be provided in which, even when a terminal 120 located far from a base station 110 transmits a wireless signal, a transmitted waveform of the wireless signal is not accompanied by nonlinear distortion degradation of an amplifier.

[Modification]

A method of using an SINR as the reception quality of the base station 110 in order to estimate a propagation environment of a wireless signal between the base station 110 and the terminal 120 has been described in the embodiment of the present disclosure. However, the reception quality of the base station 110 need not be limited to the SINR.

In addition, a case where the terminal 120 is the transmitter 220 and the base station 110 is the receiver 210 has been described in the embodiment of the present disclosure. However, transmission and reception may be interchanged. In other words, the terminal 120 may be the receiver 210 and the base station 110 may be the transmitter 220.

In addition, in the present disclosure, it is described in step 240 that the nonlinear distortion degradation amount informing unit 223 of the terminal 120 calculates the nonlinear distortion degradation amount D ($P_T$, MCS') with respect to all modified MCS indexes that are expected to be used, respectively. In addition, in step 244, it is described that the SINR informing unit 216 of the base station 110 calculates the SINR ($P_T$, MCS') with respect to all modified MCS indexes that are expected to be used in the transmitter 220, respectively. Inventions can also be extracted from these disclosures to provide a new wireless communication system that differs from the wireless communication system 200 according to the present disclosure. In other words, a new wireless communication system including a terminal configured to include processing of step 240 and a base station configured so as to include processing of step 244 can be provided. In this case, modified MCS indexes including a single-carrier scheme need not be used as the secondary modulation scheme.

In a similar manner, it is described in step 243 that the simulator unit 217 of the base station 110 determines the fading margin value F by simulation. Inventions can be extracted from this function to provide a new wireless communication system that differs from the wireless communication system 200 according to the present disclosure. In other words, a new wireless communication system including the terminal 120 and a base station configured so as to include processing of step 243 can be provided. In this case, modified MCS indexes including a single-carrier scheme need not be used as the secondary modulation scheme.

[Correspondence with Terms Used in Claims]

Processing of calculating the nonlinear distortion degradation amount D ($P_T$, MCS') from the nonlinear characteristics of the amplifier which is described with reference to Fig. 9 and which is executed by the nonlinear distortion degradation amount informing unit 223 of the transmitter 220 is referred to as nonlinear distortion degradation amount calculation processing. In other words, the nonlinear distortion degradation amount calculation processing is processing of step 240. In a similar manner, processing by the modulation coding scheme selecting unit 225 of the transmitter 220 of comparing the SINR ($P_T$, MCS') and a required SINR (MCS') with each other and selecting one modified MCS index from modified MCS indexes is referred to as modulation coding scheme selection processing. In other words, the modulation coding scheme selection processing is processing of step 246. In a similar manner, processing by the transmitter 220 of performing primary and secondary modulation and coding based on modified MCS indexes is referred to as modulation coding processing. The modulation coding processing is processing executed by each unit of the transmitter 220 shown in Fig. 6 and is processing of step 247.

Processing of calculating the SINR ($P_T$, MCS') which is described with reference to Fig. 9 and which is executed by the SINR informing unit 216 of the receiver 210 is referred to as reception quality calculation processing. In other words, the reception quality calculation processing is processing of step 244.

**Reference Signs List**

| | |
|---|---|
| 100, 200 | Wireless communication system |
| 110 | Wireless base station |
| 120 | Wireless terminal device |
| 210 | Receiver |
| 211 | Signal amplifying unit |
| 212 | Antenna |
| 213 | Analog-digital converting unit |
| 214 | Demodulation decoding unit |
| 215 | Information bit detecting unit |
| 216 | SINR informing unit |
| 217 | Simulator unit |
| 220 | Transmitter |
| 221 | Information bit generating unit |
| 222 | Power informing unit |
| 223 | Nonlinear distortion degradation amount informing unit |
| 224 | Modulation coding unit |
| 225 | Modulation coding scheme selecting unit |
| 226 | Digital-analog converting unit |
| 227 | Transmit power control unit |
| 228 | Signal amplifying unit |
| 229 | Antenna |
| 230 | SINR information processing unit |

**Claims**

1. A wireless communication system which performs adaptive modulation of a wireless signal to be transmitted by a transmitter by selecting one of MCS indexes being combinations of a predefined modulation scheme and coding rate in accordance with a reception quality of a receiver, wherein
the transmitter is configured to execute:

nonlinear distortion degradation amount calculation processing of calculating a nonlinear distortion degradation amount of an amplified signal based on nonlinear characteristics of an amplifier provided in the transmitter;
processing of notifying the receiver of information on average transmission power of the transmitter and the nonlinear distortion degradation amount;
modulation coding scheme selection processing of selecting one of the MCS indexes by comparing the reception quality notified by the receiver and a required reception quality specified for each of the MCS indexes with each other;
modulation coding processing of modulating and coding a transmission signal based on the one MCS index selected in the modulation coding scheme selection processing; and
processing of transmitting the transmission signal modulated and coded in the modulation coding processing to the receiver,
the receiver is configured to execute:

reception quality calculation processing of calculating the reception quality based on the average transmission power and the nonlinear distortion degradation amount notified by the transmitter; and
processing of transmitting the reception quality calculated in the reception quality calculation processing to the transmitter, and
the MCS index includes a single carrier modulation scheme as a secondary modulation scheme.

2. The wireless communication system according to claim 1, wherein
the transmitter includes:

in the nonlinear distortion degradation amount calculation processing, processing of calculating the nonlinear distortion degradation amount with respect to all of the MCS indexes expected to be used, respectively,

the receiver includes:

in the reception quality calculation processing, processing of calculating the reception quality with respect to all of the MCS indexes expected to be used, respectively, and
the transmitter includes:
in the modulation coding scheme selection processing, processing of selecting one of the MCS indexes by comparing the reception quality calculated with respect to all of the MCS indexes expected to be used and required reception quality of the MCS indexes with each other.

3. The wireless communication system according to claim 1, wherein
the receiver further includes:

processing of calculating a fading margin value of a wireless signal to be transmitted by the transmitter, and
in the reception quality calculation processing,
the reception quality is calculated based on the fading margin value.

4. The wireless communication system according to claim 3, wherein

the reception quality is an SINR, and
in the reception quality calculation processing, the receiver calculates the SINR based on the following equation in which the average transmission power is denoted by $P_T$, the nonlinear distortion degradation amount by $D (P_T, MCS')$, a propagation loss by L, an interference noise power by I, a noise power by N, and a fading margin value by F:

$$SINR (P_T, MCS') = P_T - L - I - N - D (P_T, MCS') - F$$

5. A wireless terminal device which performs adaptive modulation of a wireless signal to be transmitted by selecting one of MCS indexes being combinations of a modulation scheme and coding rate in accordance with a reception quality of a receiver, the wireless terminal device being configured to execute:

processing of calculating a nonlinear distortion degradation amount of an amplified signal based on nonlinear characteristics of an amplifier provided in the wireless terminal device;
processing of notifying the receiver of information on average transmission power of the wireless terminal device and the nonlinear distortion degradation amount;
modulation coding scheme selection processing of selecting one of the MCS indexes by comparing the reception quality notified by the receiver and a required reception quality specified for each of the MCS indexes with each other;
modulation coding processing of modulating and coding a transmission signal based on the one MCS index selected in the modulation coding scheme selection processing; and
processing of transmitting the transmission signal modulated and coded in the modulation coding processing to the receiver, wherein
the MCS index includes a single carrier modulation scheme as a secondary modulation scheme.

6. A wireless base station configured to execute:

processing of calculating a fading margin value of a wireless signal to be transmitted by another wireless station to the wireless base station;
reception quality calculation processing of calculating, based on the fading margin value, average transmission power which is notified by the other wireless station, and a nonlinear distortion degradation amount of an amplifier provided in the other wireless station which is calculated with respect to all MCS indexes expected to be used by the other wireless station and which is notified by the other wireless station, reception quality with respect to all of the MCS indexes expected to be used by the other wireless station, respectively; and
processing of transmitting all of the reception qualities calculated in the reception quality calculation processing to the other wireless station.

7. A wireless communication method of performing adaptive modulation of a wireless signal to be transmitted by a transmitter by selecting one of MCS indexes being combinations of a modulation scheme and coding rate in accordance with a reception quality of a receiver, wherein
the transmitter executes:

processing of calculating a nonlinear distortion degradation amount of an amplified signal based on nonlinear characteristics of an amplifier provided in the transmitter;
processing of notifying the receiver of information on average transmission power of the transmitter and the nonlinear distortion degradation amount;
modulation coding scheme selection processing of selecting one of the MCS indexes by comparing the reception quality notified by the receiver and a required reception quality specified for each of the MCS indexes with each other;
modulation coding processing of modulating and coding a transmission signal based on the one MCS index selected in the modulation coding scheme selection processing; and
processing of transmitting the transmission signal modulated and coded in the modulation coding processing to the receiver,
the receiver executes:

reception quality calculation processing of calculating the reception quality based on the average transmission power and the nonlinear distortion degradation amount notified by the transmitter; and
processing of transmitting the reception quality calculated in the reception quality calculation processing to the transmitter, wherein
the MCS index includes a single carrier modulation scheme as a secondary modulation scheme.

8. A wireless communication program to be executed by a wireless terminal device which performs adaptive modulation of a wireless signal to be transmitted by selecting one of MCS indexes being combinations of a modulation scheme and coding rate in accordance with a reception quality of a receiver, wherein

the MCS indexes include a single carrier modulation scheme as a secondary modulation scheme, and the wireless communication program includes a program that causes
the wireless terminal device to execute:

processing of calculating a nonlinear distortion degradation amount of an amplified signal based on nonlinear characteristics of an amplifier provided in the wireless terminal device;
processing of notifying the receiver of information on average transmission power of the wireless terminal device and the nonlinear distortion degradation amount;
modulation coding scheme selection processing of selecting one of the MCS indexes by comparing the reception quality notified by the receiver and a required reception quality specified for each of the MCS indexes with each other;
modulation coding processing of modulating and coding a transmission signal based on the one MCS index selected in the modulation coding scheme selection processing; and
processing of transmitting the transmission signal modulated and coded in the modulation coding processing to the receiver.

Fig. 1

Fig. 2

| Table 1 SINR and CQI mapping to modulation and coding rate | | | | |
|---|---|---|---|---|
| SINR | CQI | Modulation | Code rate (× 1024) | Efficiency (information bits per symbol) |
| −6.9360 | 1 | QPSK | 78 | 0.1523 |
| −5.1470 | 2 | QPSK | 120 | 0.2344 |
| −3.1800 | 3 | QPSK | 193 | 0.3770 |
| −1.2530 | 4 | QPSK | 308 | 0.6016 |
| 0.7610 | 5 | QPSK | 449 | 0.8770 |
| 2.6990 | 6 | QPSK | 602 | 1.1758 |
| 4.6940 | 7 | 16QAM | 378 | 1.4766 |
| 6.5250 | 8 | 16QAM | 490 | 1.9141 |
| 8.5730 | 9 | 16QAM | 616 | 2.4063 |
| 10.3660 | 10 | 64QAM | 466 | 2.7305 |
| 12.2890 | 11 | 64QAM | 567 | 3.3223 |
| 14.1730 | 12 | 64QAM | 666 | 3.9023 |
| 15.8880 | 13 | 64QAM | 772 | 4.5234 |
| 17.8140 | 14 | 64QAM | 873 | 5.1152 |
| 19.8290 | 15 | 64QAM | 948 | 5.5547 |

Fig. 3

OUTPUT INTENSITY OF THE AMPLIFIER

LINEAR REGION

NONLINEAR REGION

INPUT INTENSITY OF THE AMPLIFIER

# Fig. 4

**Figure 5.5.** PAPR for QPSK, 16-QAM and 64-QAM modulations with 16 parallel channels.

Fig. 5

Fig. 6

Fig. 7

Fig. 8

| MCS' | PRIMARY MODULATION | SECONDARY MODULATION | CODE RATE | REQUIRED SINR |
|---|---|---|---|---|
| C-1 | BPSK | CP-OFDM | ◯◯ | ◯◯dB |
| C-2 | QPSK | CP-OFDM | ◯◯ | ◯◯dB |
| C-3 | 16QAM | CP-OFDM | ◯◯ | ◯◯dB |
| C-4 | 64QAM | CP-OFDM | ◯◯ | ◯◯dB |
| | ⋮ | ⋮ | ⋮ | ⋮ |
| D-1 | BPSK | DFT-spread | ◯◯ | ◯◯dB |
| D-2 | QPSK | DFT-spread | ◯◯ | ◯◯dB |
| D-3 | 16QAM | DFT-spread | ◯◯ | ◯◯dB |
| D-4 | 64QAM | DFT-spread | ◯◯ | ◯◯dB |
| | ⋮ | ⋮ | ⋮ | ⋮ |

| MCS' | PRIMARY MODULATION | SECONDARY MODULATION | CODE RATE | REQUIRED SINR |
|---|---|---|---|---|
| S-1 | BPSK | Single-carrier | ◯◯ | ◯◯dB |
| S-2 | QPSK | Single-carrier | ◯◯ | ◯◯dB |
| S-3 | 16QAM | Single-carrier | ◯◯ | ◯◯dB |
| S-4 | 64QAM | Single-carrier | ◯◯ | ◯◯dB |
| | ⋮ | ⋮ | ⋮ | ⋮ |

# Fig. 9

220

TRANSMITTER

NONLINEAR DISTORTION DEGRADATION AMOUNT INFORMING UNIT 223 CALCULATES D $(P_T, MCS')$ BASED ON NONLINEARITY OF AMPLIFIER

240

TRANSMIT, TO RECEIVER 210, DATA THAT TRANSMITTER 220 DESIRES TO TRANSMIT AND INFOMATION ON $P_T$, $D(P_T, MCS')$

241

246

MCS SELECTING UNIT 225 COMPARES SINR $(P_T, MCS')$ WITH REQUIRED SINR $(MCS')$ AND SELECTS ONE OF MODIFIED MCS INDEXES

247

PRIMARY AND SECONDARY MODULATION AND CODING BASED ON MODIFIED MCS INDEX

210

RECEIVER

242

MEASURE PROPAGATION LOSS L, INTERFERENCE NOISE POWER I, AND NOISE POWER N

243

SIMULATOR UNIT 217 DETERMINES FADING MARGIN VALUE F BY SIMULATION

244

SINR INFORMING UNIT 216 CALCULATES SINR (PT, MCS')

245

TRANSMIT SINR $(P_T, MCS')$ TO TRANSMITTER 220

## INTERNATIONAL SEARCH REPORT

| International application No. |
|---|
| **PCT/JP2022/035987** |

| A. | CLASSIFICATION OF SUBJECT MATTER |
|---|---|

*H04W 28/18*(2009.01)i
FI:   H04W28/18 110

According to International Patent Classification (IPC) or to both national classification and IPC

| B. | FIELDS SEARCHED |
|---|---|

Minimum documentation searched (classification system followed by classification symbols)

H04B7/24-7/26; H04W4/00-99/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | JP 2011-061464 A (FUJITSU LTD.) 24 March 2011 (2011-03-24) <br> paragraphs [0016]-[0032], fig. 2 | 1, 3-8 |
| A | | 2 |
| Y | JP 2004-186923 A (NTT DOCOMO INC.) 02 July 2004 (2004-07-02) <br> paragraph [0098] | 1, 3-8 |
| Y | JP 2016-086431 A (INTERDIGITAL TECHNOLOGY CORP.) 19 May 2016 (2016-05-19) <br> paragraphs [0100], [0101] | 1, 3-8 |
| Y | JP 2018-007241 A (PANASONIC INTELLECTUAL PROPERTY CORPORATION OF AMERICA) 11 January 2018 (2018-01-11) <br> paragraphs [0180], [0182] | 1, 3-8 |
| Y | JP 2014-523159 A (ALCATEL LUCENT) 08 September 2014 (2014-09-08) <br> paragraph [0069] | 3-6, 8 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **13 December 2022** | **27 December 2022** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

## INTERNATIONAL SEARCH REPORT
### Information on patent family members

International application No.

**PCT/JP2022/035987**

| Patent document cited in search report | | | Publication date (day/month/year) | Patent family member(s) | | | Publication date (day/month/year) |
|---|---|---|---|---|---|---|---|
| JP | 2011-061464 | A | 24 March 2011 | US paragraphs [0046]-[0062], fig. 2 | 2011/0059691 | A1 | |
| JP | 2004-186923 | A | 02 July 2004 | (Family: none) | | | |
| JP | 2016-086431 | A | 19 May 2016 | US paragraphs [0087], [0088] | 2008/0220806 | A1 | |
| | | | | WO | 2008/109162 | A2 | |
| | | | | EP | 2464176 | A2 | |
| | | | | CN | 201167319 | Y | |
| | | | | KR | 10-2009-0132591 | A | |
| JP | 2018-007241 | A | 11 January 2018 | US paragraphs [0212], [0214] | 2019/0052395 | A1 | |
| | | | | WO | 2018/008373 | A1 | |
| | | | | CN | 109196832 | A | |
| JP | 2014-523159 | A | 08 September 2014 | US paragraph [0091] | 2014/0146700 | A1 | |
| | | | | WO | 2012/175362 | A1 | |
| | | | | EP | 2538713 | A1 | |
| | | | | CN | 103650571 | A | |
| | | | | KR | 10-2014-0027413 | A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **A. CHIUMENTO et al.** Adaptive CSI and feedback estimation in LTE and beyond: a Gaussian process regression approach. *EURASIP Journal on Wireless Communications and Networking*, 2015

- **F. KHAN**. LTE for 4G Mobile Broadband Air Interface Technologies and Performance. Cambridge University Press, 2009, 95